**Europäisches Patentamt**

(19) **European Patent Office**

**Office européen des brevets**

(11) Numéro de publication: **0 025 746**
**B1**

(12) # FASCICULE DE BREVET EUROPEEN

(45) Date de publication du fascicule du brevet: **14.12.83**

(51) Int. Cl.³: **C 01 B 15/023,**
**B 01 J 21/20**

(21) Numéro de dépôt: **80401260.7**

(22) Date de dépôt: **04.09.80**

(54) Régénération des catalyseurs de reconversion chimique utilisés dans un procédé cyclique de fabrication du peroxyde d'hydrogène et utilisation d'un appareil pour la mise en oeuvre.

(30) Priorité: **06.09.79 FR 7922266**

(43) Date de publication de la demande:
**25.03.81 Bulletin 81/12**

(45) Mention de la délivrance du brevet:
**14.12.83 Bulletin 83/50**

(84) Etats contractants désignés:
**BE DE FR GB IT SE**

(56) Documents cités:
**FR - A - 1 340 901**
**FR - A - 1 427 928**
**FR - A - 2 195 590**
**FR - A - 2 298 779**

**CHEMISCHE TECHNOLOGIE, K. Winnacker L. Küchler, Band 1 pages 453-454**

(73) Titulaire: **OXYSYNTHESE**
**6, rue Cognacq-Jay**
**F-75007 Paris (FR)**

(72) Inventeur: **Thirion, Pierre**
**15, Hameau du Manoir Noyarey**
**F-38360 Sassenage (FR)**

(74) Mandataire: **Bouton Neuvy, Liliane et al,**
**L'Air liquide, Société Anonyme pour L'Etude et L'Exploitation des Procédés Georges Claude 75, Quai d'Orsay**
**F-75321 Paris Cedex 07 (FR)**

Courier Press, Leamington Spa, England.

Régénération des catalyseurs de reconversion chimique utilisés dans un procédé cyclique de fabrication du peroxyde d'hydrogène et utilisation d'un appareil pour la mise en oeuvre

La présente invention concerne un procédé de régénération des catalyseurs de reconversion chimique utilisés dans un procédé cyclique de fabrication du peroxyde d'hydrogène.

Il est bien connu que le procédé de fabrication du peroxyde d'hydrogène par les quinones, est un procédé cyclique par lequel une quinone dissoute dans un solvant organique est tout d'abord hydrogénée en hydroquinone, puis ensuite, oxydée par l'air ou l'oxygène, en hydro-peroxyde de quinone; ce dernier mis en contact avec de l'eau fournit une solution aqueuse de peroxyde d'hydrogène et la solution organique contenant la quinone régénérée.

Cette solution réintroduite dans le cycle, hydrogénation - oxydation - extraction, est appelée "solution navette" ou "solution de travail".

Les quinones utilisées sont en général les alkyl-anthraquinones et très particulièrement les alkyl 2-anthraquinones.

Dans le cycle de fabrication du peroxyde d'hydrogène à côté des réactions principales, viennent s'ajouter des réactions secondaires indésirables provoquant une dégradation de la quinone et des solvants employés.

En raison du coût très élevé des anthraquinones substituées d'une part, et, l'effet en général préjudiciable du cumul des produits de dégradation sur les propriétés de la solution de travail d'autre part, il est indispensable de prévoir un traitement particulier de cette solution pour en arrêter la dégradation ou, tout au moins, en réduire son développement au minimum possible. Ces réactions secondaires de dégradation sont normalement réversibles il est possible d'en inverser le sens en modifiant les conditions du milieu réactionnel. Une technique largement utilisée, consiste à traiter la solution navette à température relativement élevée (80 à 200°C) sur un catalyseur solide; ceci s'effectue de préférence sur une dérivation du circuit principal appelée circuit de reconversion.

Les catalyseurs de reconversion sont en général des solides microporeux neutres ou légèrement alcalins; ce sont souvent des alumines de textures diverses, mais les gels d'alumino-silicates alcalins sont aussi très employés et de plus en plus appréciés.

Lorsque l'on installe une masse catalytique sur un circuit de reconversion, on remarque dans tous les cas, que l'activité de catalyse est élevée durant les premières heures de son installation, puis que cette activité va en décroissant avec la durée d'utilisation; aussi après quelques jours de service, la charge catalytique doit être renouvelée. On sait que ces catalyseurs microporeux qui sont des adsorbants ont une forte tendance à l'encrassement, et exercent un effet d'épuration de la solution de travail.

Le renouvellement de ces charges de catalyseur pose plusieurs problèmes à l'industriel. Ils sont constitutués, notamment par l'achat de catalyseur neuf qui représente une part importante des frais d'exploitation, et ensuite par la destruction des charges catalytiques usées. Le catalyseur usagé est imprégné de matières organiques, et en particulier de phénols toxiques, ce qui interdit son rejet dans les décharges en raison des risques de pollution de l'eau et des terrains. Ces charges ne peuvent pas être abandonnées sans traitement préalable de détoxification. Il semblerait que le seul traitement simple et efficace reste encore le grillage à l'air de ces charges laissant un résidu inerte. Cependant, le grillage des catalyseurs microporeux employés sur les cycles, de fabrication de péroxyde d'hydrogène n'est pas dénué d'inconvénients polluants; car la majeure partie de la matière organique imprégnée sur le catalyseur distille sous l'influence de la chaleur entre 280 et 500°C en provoquant un abondant aérosol, jaune incommodant et toxique.

Enfin, si l'on considère que ces catalyseurs contiennet 75 à 90% de résidu minéral, non seulement ils ne peuvent être considérés comme des combustibles ayant une certaine valeur, mais leur élimination réalisée par des spécialistes de la destruction des déchets industriels a une influence défavorable sur l'économie du procédé de fabrication du peroxyde d'hydrogène.

Dès 1962, dans le brevet français 1,340,901, on a proposé un procédé de réactivation des catalyseurs de reconversion. Selon ce procédé, le catalyseur constitué par un alumino-silicate de sodium est d'abord lavé à 80°C avec un solvant approprié, puis le solvant est éliminé en traitant le catalyseur par un courant de vapeur d'eau à 130°C; le catalyseur est finalement chauffé de préférence entre 400 et 450°C en présence d'air pendant une durée supérieure à 1 heure, de préférence entre 8 et 12 heures.

Le catalyseur de reconversion régénéré dans ces conditions présente, par rapport au catalyseur neuf, une activité catalytique intéressante. Toutefois, ce catalyseur contient des résidus de carbone et des impuretés réductrices telles des sulfures qui sont indésirables dans le circuit de fabrication du peroxyde d'hydrogène. Les sulfures inhibent l'activité du catalyseur utilisé dans la phase d'hydrogénation de la solution de travail, ce catalyseur étant généralement élaboré à partir des métaux du groupe VIII de la classification périodique des éléments, tels nickel et palladium.

Il a été trouvé selon la présente invention un procédé qui permet de régénérer à l'échelle industrielle, le catalyseur de reconversion, dans des conditions techniques, économiques, écologiques et de sécurité particulièrement avantageuses.

Le nouveau procédé conduit à l'élimination des résidus de carbone dans le catalyseur régénéré et la transformation des sulfures en sulfates sans effet sur l'activité du catalyseur d'hydrogénation.

Le procédé de régénération mis en oeuvre présente notamment l'avantage de détruire complètement les matières toxiques imprégnées sur le catalyseur de reconversion usé en émettant des vapeurs non polluantes.

L'intérêt de l'invention réside dans la transformation d'un déchet polluant en un produit réutilisable possédant 70 à 80% de l'activité catalytique du produit neuf; ces performances restant par la suite pratiquement constantes même après de multiples cycles de régénérations et de réutilisations.

Selon le procédé de régénération des catalyseurs de reconversion chimique, utilisés dans un procédé cyclique de fabrication du peroxyde d'hydrogène, par traitement thermique d'un catalyseur du type aluminosilicate alcalin, on introduit le catalyseur à régénérer dans une enceinte dont la température est comprise entre 650 et 700°C, puis on le soumet à un chauffage progressif jusqu'à une température pouvant atteindre 850°C; ce traitement thermique ou grillage étant efficace après une durée supérieure à 15 minutes, de préférence comprise entre 30 minutes et deux heures; ce dit traitement étant mis en oeuvre en présence d'une atmosphère oxydante, telle l'air, l'air suroxygéné ou l'oxygène, circulant a co-courant du catalyseur à régénérer, et introduite dans l'enceinte thermique à température ambiante.

L'activité catalytique du catalyseur est conservée malgré une modification profonde de la microstructure, le produit régénéré pouvant être normalement réutilisé dans le circuit de reconversion, subir une deuxième régénération, pratiquée dans les mêmes conditions que la première régénération, être à nouveau réintroduit dans le circuit de reconversion puis régénéré de multiples fois. Les performances du catalyseur régénéré a constantes après plusieurs cycles de régénérations et de réutilisations.

L'activité catalytique du catalyseur est conservée malgré une modification profonde de la microstructure, le produit régénéré pouvant être normalement réutilisé dans le circuit de reconversion, subir une deuxième régénération, pratiquée dans les mêmes conditions que la première régénération, être à nouveau réintroduit dans le circuit de reconversion puis régénéré de multiples fois. Les performances du catalyseur régénéré restent constantes après plusieurs cycles de régénérations et de réutilisations.

Pour la mise en oeuvre du procédé de régénération des catalyseurs de reconversion, on peut proposer avantageusement l'utilisation d'un appareil du type four tournant incliné sur l'horizontale de 0,7 à l%, comportant sur la paroi intérieure, en sa partie basse en aval, des ailettes radiales et à son extrémité basse en sortie un diaphragme, la dite extrémité debouchant dans un caisson de réception muni à sa partie supérieure d'une cheminée de tirage canalisant les fumées de grillage et à sa partie inférieure d'une tubulure destinée à la sortie du catalyseur.

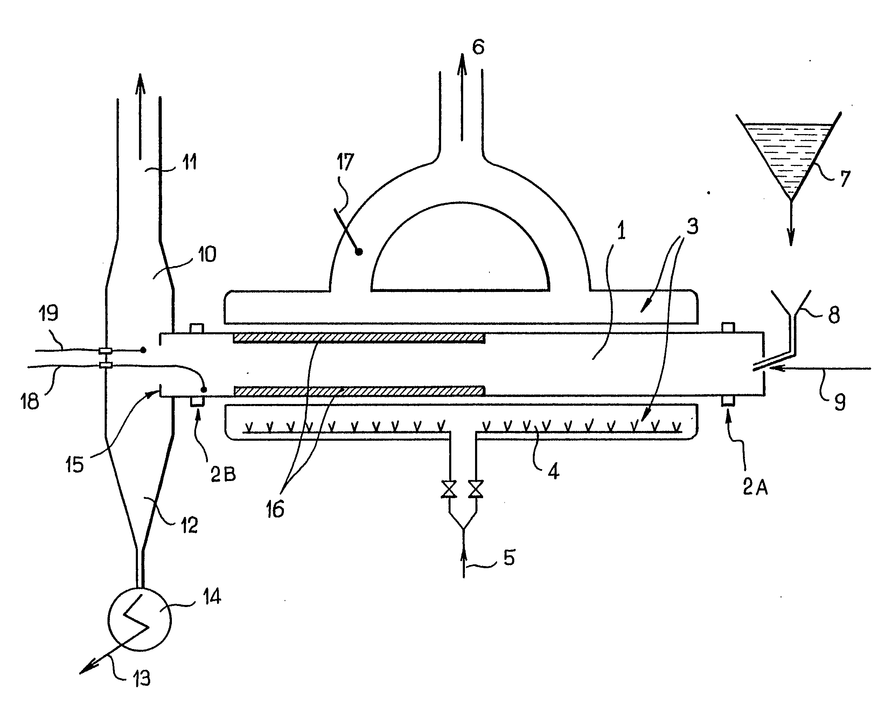

Ce four (1) avec un chemin de roulement (2A et 2B) présenté sur la figure du dessin annexé est équipé d'un caisson chauffant (3), par exemple d'une longueur de 2m50 chauffé par 4 rampes au gaz propane (4) arrivant par la canalisation (5); deux rampes sont disposées en amont et deux en aval. Le réglage des débits de gaz amont et aval est indépendant. Les fumées de chauffage s'échappent en (6) à la partie supérieure du caisson. L'air frais et le catalyseur à régénérer (7) sont admis en amont du four par (8) et (9).

En aval du four tournant se trouve un caisson de réception (10), muni à la partie supérieure d'une cheminée de tirage (11) destinée à canaliser les fumées de grillage et favoriser la circulation de l'air dans le four rotatif et à la partie inférieure d'une tubulure (12) destinée à la sortie du catalyseur grillé. Le catalyseur régénéré passe par (13) dans un tube tournant (14), refroidi à l'eau. L'entrée du four et la cheminée de tirage sont équipées d'un volet de réglage d'admission d'air non représentés.

Le four tournant est incliné sur l'horizontale de 0,7 à 1%, de manière à assurer la circulation du catalyseur. A la sortie du four, ou extrémité basse, il comporte un diaphragme, ou flasque (15), destiné à régler le temps de transit du catalyseur dans le four en retenant une masse plus ou moins importante dans le four. En marche continue le réglage du diaphragme peut avantageusement être tel que la rétention du four soit d'environ 25 à 30 litres de poudre.

Sur la paroi intérieure du four, dans sa partie basse et an aval le four comporte des ailettes radiales (16), destinées à favoriser le contact entre le catalyseur et l'air circulant dans le four. Par exemple, sur une longueur de 1,50 m, on dispose 6 ailettes radiales (16) d'une hauteur de 50 mm. Le four étant en rotation (6 tours par minute), ces ailettes fluidisent et aèrent la poudre catalytique pour en améliorer l'oxydation par les gaz chauds.

Les températures dans la partie avale, dans le caisson de chauffage et dans le caisson de réception sont contrôlées par les thermocouples (17), (18), et (19).

En marche régulière et continue, l'évaporation de l'eau et des matières organiques en amont du four, demande un apport calorifique important; en aval la combustion des fumées et le grillage de la poudre très exothermiques permettent de réduire fortement l'apport calorifique extérieur. Au-dessus de 700°C, la combustion des fumées a lieu dans le four et il sort de la cheminée des fumées incolores et non polluantes.

Le procédé de l'invention a notamment été appliqué avec succès à la régénération d'un gel d'alumino-silicate de sodium hydraté ayant une teneur en $Al_2O_3$ comprise entre 55 et 63% du produit sec et commercialisé sous la désignation de "HAS 1". Son humidité résiduelle, obtenue par séchage du produit pendant 6h à 120°C, est inférieure à 10% en poids.

Il se présente sous la forme de sphérules de 0,08 à 0,4 mm de diamètre. La densité apparente du produit séché est comprise entre 0,6 et 0,8 g/cm³.

Le contrôle de l'activité catalytique du produit neuf et régénéré a été effectué selon la méthode suivante: on introduit 50 g de catalyseur dans une petite colonne chauffée en acier inoxydable. On fait alors circuler sur le produit en circuit ouvert, durant 4 à 8 heures à 140—145°C, sous une pression de 4 bars, une solution navette d'un cycle de fabrication à l'anthraquinone au débit de 0,25 l./h.

Avec 2 colonnes placées en parallèle et alimentées avec la même solution navette, il est possible de comparer, l'un par rapport à l'autre, deux catalyseurs différents. On dose dans les solutions navettes entrant et sortant de chaque colonne les quinones actives par polarographie; l'augmentation de la concentration de ces quinones représente la reconversion au passage sur catalyseur. Cette analyse peut être effectuée à tous moments, main on a préféré fournir le résultat global et moyen d'une marche de 4 ou 8 heures, plus sûr qu'un prélévement instantané.

Donc, en opérant sur deux colonnes contenant, l'une le catalyseur neuf, l'autre le catalyseur régénéré, l'augmentation de la concentration en quinones obtenue sur le catalyseur régénéré par rapport à l'augmentation obtenue sur catalyseur neuf, représente le taux de régénération catalytique obtenu par régénération. C'est de ce taux, exprimé en %, dont il sera fait mention dans les exemples ci-après.

La surface spécifique du catalyseur a d'autre part été mesurée par la méthode de Brunner-Emmett-Teller (B E T).

Le catalyseur testé est un gel d'alumino-silicate alcalin en particulier de sodium, connu sous la dénomination "HAS 1", ce catalyseur usé contient une forte proportion d'eau et de matières organiques qui se vaporisent progressivement lorsque le produit est chauffé.

Un échantillon d'environ 5 g d'HAS 1, chauffé à différents paliers de température, sous une atmosphère d'azote, permet de déterminer la perte de poids de l'échantillon; celui-ci est maintenu pendant 40 minutes à chaque palier, refroidi, puis pesé. Les résultats sont rassemblés dans le tableau ci-dessous:

| Palier de température | Perte de poids cumulée |
|---|---|
| 120°C | 22% |
| 275°C | 23% |
| 530°C | 35,6% |

On constate que la majeure partie de la perte de poids (22%), intervient entre l'ambiente et le palier de 120°C; la perte de poids est faible (1%) entre 120 et 275°C; elle est de 12,6% entre 275 et 530°C. Après ce test, le produit est devenu noir par la présence du carbone résiduaire issu du craquage des matières organiques peu volatiles. Le même échantillon d'HAS 1 chauffé ensuite à l'air, à 530°C, jusqu'à disparition du $CO_2$ dans les gaz sortant du four, fait apparaître une perte de poids de 1,4%. La totalité des matières volatiles contenues dans l'HAS 1 usé est de 37%.

Il est donné ci-après des exemples qui illustrent l'invention à titre non limitatif et montrent que l'activité catalytique de l'HAS 1 régénéré dépend de la température de régénération, du temps de contact, mais aussi du processus de chauffage de l'HAS 1 usé.

## Exemple 1

On effectue trois expériences de grillage au four à moufle de laboratoire, avec une circulation d'air par convection naturelle et sur le même lot de "HAS 1" que celui utilisé pour mesurer la quantité résiduelle de matière organique.

1. Le four étant à 470°C, on y introduit 100 g de catalyseur usé, disposés en couches de 10 à 15 mm d'épaisseur dans un plateau métallique (de nickel ou d'acier inoxydable). On ferme le four; durant les 20 premières minutes, on observe un départ de vapeur d'eau puis d'aérosol organique. Après 15 heures à 470°C, le produit est défourné; il a un aspect gris témoin de la présence de carbone non encore oxydé. Le catalyseur est alors refroidi et son activité est mesurée, suivant le test décrit précédemment.

2. Le four étant à 650°C, on renouvelle l'expérience ci-dessus avec une nouvelle charge de catalyseur usé. Le départ de vapeur d'eau et de vapeurs organiques ne dure que quelques minutes. Après 3 heures à 650°C, le catalyseur est blanc; il est défourné, refroidi et testé également.

3. Le four étant à 800°C, le catalyseur est blanc; il est défourné, refroidi et testé.

L'activité catalytique du catalyseur neuf (HAS 1) mesurée en laboratoire étant la référence (100%), celle des catalyseurs régénérés sont les suivantes:

| Température de régénération | 470°C | 650°C | 800°C |
|---|---|---|---|
| Activité catalytique | 62,8% | 64,0% | 71,5% |

Donc un grillage effectué en présence d'air, pendant 2 heures à 800°C, donne finalement un produit plus actif qu'un catalyseur régénéré à 470°C pendant 15 heures et fournissant un produit contenant encore du carbone. Ce carbone est encore présent après 24 heures de grillage à 470°C.

### Exemple 2

On dispose d'un petit four de laboratoire vertical destiné à l'étude du grillage continu de minerais pulvérisés, en lit fluidisé. L'alimentation (à la partie supérieure) et la sortie (en pied de four) des poudres sont donc effectuées en continu par vis d'Archimède.

Le four est d'abord préchauffé à la température choisie, puis alimenté en continu. Après mise en régime de 2 heures environ, on estime que le produit sortant est représentatif d'une marche continue. On effectue ainsi trois essais comportant le même temps de contact moyen de l'heure et à trois températures différentes: 650°, 740° et 800°C.

Aucun des 3 échantillons grillés et testés ne possède une activité catalytique, supérieure à 23%.

Cette expérience indique donc que si les grains de catalyseur individualisés, sont portés brutalement à haute température par projection dans un gaz très chaud, ces grains perdent presque toute leur activité catalytique.

### Exemple 3

Dans un four tournant en acier inoxydable réfractaire du type précédemment décrit, de grandeur semi-industrielle (diamètre 300 m) et on régénére environ 2 000 Kg de catalyseur de reconversion usagé du type "HAS 1" décrit ci-dessus, pour obtenir environ 1 300 à 1 500 Kg de produit régénéré.

Le four étant mis en rotation, on le préchauffe vers 650—700°C. Le catalyseur usagé est alors introduit en continu à raison de 25 kg par heure. On poursuit la montée en température de façon à atteindre dans le produit sortant (poudre régénérée situee derrière le flasque de sortie) 800 à 830°C.

En alimentant, à raison de 25 Kg par heure, le temps de séjour du catalyseur dans le four est de 50 à 60 minutes; le produit sortant à 800°C est blanc lorsqu'il est refroidi.

En appliquant le test catalytique de reconversion déjà décrit sur l'échantillon moyen de 1 350 Kg de catalyseur régénéré, on trouve une activité égale à 76% de celle du produit neuf. Installé dans le cycle de fabrication industrielle de peroxyde d'hydrogene, ce catalyseur se comporte practiquement comme du catalyseur neuf, sans présenter sur le cycle de fabrication d'effets secondaires ou anormaux.

Sur le catalyseur régénéré, on a effectué des mesures de texture et de porosité en comparaison avec même catalyseur neuf. Avant d'effectuer ces mesures, les produits sont préalablement introduits dans des ampoules et placés sous courant d'azote à 150°C durant 15 heures. Les résultats sont consignés dans le tableau suivant (1 nm = 1 nanomètre = 10 A:

| Catalyseur | Surface BET m2/g (Pores ⩾ 0,8 nm) | Microporosité <4 nm Surface m2/g | Porosité moyenne 4 à 25 nm Surface m2/g |
|---|---|---|---|
| Neuf | 263 | 243 | 20 |
| Régénéré | 97 | 51 | 46 |

Il est remarquable que le produit régénéré ait encore 76% d'activité catalytique alors que sa surface specifique n'est plus que de 37% de celle du produit neuf.

### Exemple 4

Le catalyseur régénéré selon le processus indiqué dans l'exemple 3 est utilisé sur le cycle de fabrication industrielle; et enlevé après 15 jours de service.

Un échantillon de ce catalyseur usé a été à nouveau régénéré à 800°C au moufle de laboratoire dans des conditions identiques à celles de l'exemple 1. Cet échantillon régénéré possède une activité catalytique de 75% par rapport au produit neuf.

Il apparait donc que le catalyseur ayant subi une deuxième régénération, présente une activité catalytique équivalente au catalyseur régénéré une seule fois.

Il semble donc d'après ces exemples, que l'activité catalytique du catalyseur soit indépendante du nombre de régénérations qu'il a subi.

Les régénérations successives de l'"HAS 1", selon la procédé d'invention, permettent d'obtenir une économie sensible sur le prix de revient du peroxyde d'hydrogène.

### Revendications

1. Procédé de régénération des catalyseurs de reconversion chimique, utilisés dans un procédé cyclique de fabrication du peroxyde d'hydrogène, par traitement thermique d'un catalyseur du type alumino-silicate alcalin, caractérisé en ce que le catalyseur à régénérer est introduit dans une enceinte dont la température est comprise entre 650° et 700°C, puis est soumis à un chauffage progressif jusqu'à une température pouvant atteindre 850°C, la durée de ce traitement thermique étant supérieure à 15 minutes, le dit traitement étant mis en oeuvre en présence d'une atmosphère oxydante circulant à co-courant du catalyseur à régénérer, la dite atmosphère étant introduite dans l'enceinte thermique à température ambiante.

2. Procédé de régénération des catalyseurs de reconversion chimique selon la revendication 1, caractérisé en ce que la durée du traitement thermique est comprise entre 30 minutes et 2 heures.

3. Procédé de régénération des catalyseurs de reconversion chimique selon la revendication 1, caractérisé en ce que le procédé de régénération est mis en oeuvre en continu.

4. Procédé de régénération des catalyseurs de reconversion selon la revendication 1, caractérisé en ce que l'on soumet le catalyseur à plusieurs cycles de régénération et de réutilisation.

5. Procédé de régénération des catalyseurs de reconversion, selon la revendication 1, caractérisé en ce que le catalyseur de reconversion est un aluminosilicate de sodium.

6. Procédé de régénération des catalyseurs de reconversion selon la revendication 1, caractérisé en ce que l'atmosphère oxydante est l'air, l'air suroxygéné, ou l'oxygène.

7. Utilisation pour la mise en oeuvre du procédé de régénération des catalyseurs de reconversion, selon la revendication 1, d'un appareil du type four tournant incliné sur l'horizontale de 0,7 à 1% comportant sur la paroi intérieure en sa partie basse en aval des ailettes radiales (16) et à son extrémité basse en sortie un diaphragme (15) ladite extrémité débouchant dans un caisson de réception (10) muni à sa partie supérieure d'une cheminée de tirage (11) canalisant les fumées de grillage est à sa partie inférieure d'une tubulure (12) destinée à la sortie du catalyseur.

**Patentansprüche**

1. Verfahren zur Regenerierung von chemischen Umwandlungskatalysatoren, die in einem zyklischen Verfahren zur Herstellung von Wasserstoffperoxid verwendet werden, durch thermische Behandlung eines Katalysators vom Alkalialuminosilikattyp, dadurch gekennzeichnet, daß der zu regenerierende Katalysator in einen Raum, dessen Temperatur zwischen 650 und 700°C beträgt, eingeführt und dann einer zunehmenden Erwärmung bis zu einer Temperatur, die 850°C erreichen kann, unterzogen wird, wobei die Dauer dieser thermischen Behandlung länger als 15 Minuten ist, diese Behandlung in Gegenwart einer im Gleichstrom mit dem zu regenerierenden Katalysator zirkulierenden oxidierenden Atmosphäre durchgeführt wird und diese Atmosphäre in den Erwärmungsraum mit Umgebungstemperatur eingeführt wird.

2. Verfahren zur Regenerierung von chemischen Umwandlungskatalysatoren nach Anspruch 1, dadurch gekennzeichnet, daß die Dauer der thermischen Behandlung zwischen 30 Minuten und 2 Stunden liegt.

3. Verfahren zur Regenerierung von chemischen Umwandlungskatalysatoren nach Anspruch 1, dadurch gekennzeichnet, daß das Regenerierverfahren kontinuierlich durchgeführt wird.

4. Verfahren zur Regenerierung von Umwandlungskatalysatoren nach Anspruch 1, dadurch gekennzeichnet, daß man den Katalysator mehreren Regenerier- und Wiederbenutzungszyklen unterzieht.

5. Verfahren zur Regenerierung von Umwandlungskatalysatoren nach Anspruch 1, dadurch gekennzeichnet, daß der Umwandlungskatalysator ein Natriumaluminosilikat ist.

6. Verfahren zur Regenerierung von Umwandlungskatalysatoren nach Anspruch 1, dadurch gekennzeichnet, daß die oxidierende Atmosphäre Luft, Luft mit einem Sauerstoffüberschuß oder Sauerstoff ist.

7. Verwendung einer Vorrichtung vom Typ eines gegen die Horizontale 0,7 bis 1% geneigten Drehofens, der an seiner Innenwand in seinem unteren Teil abstromwärts Radialschaufeln (16) und an seinem unteren Austrittsende eine Drosselscheibe (15) aufweist, wobei dieses Ende in einem Aufnahmebehälter (10) mündet, der in seinem oberen Teil mit einem Abzugskamin (11), der die Röstgase kanalisiert, und in seinem unteren Teil mit einem für den Katalysatoraustritt bestimmten Stutzen (12) ausgestattet ist, zur Durchführung des Verfahrens zur Regenerierung von Umwandlungskatalysatoren nach Anspruch 1.

**Claims**

1. Process for the regeneration of chemical conversion catalysts used in a cyclic process for the production of hydrogen peroxide, by thermal treatment of a catalyst of the alkali alumino silicate type, characterized in that the catalyst to be regenerated is introduced into a chamber the temperature of which is between 650 and 700°C and then subjected to progressive heating until a temperature which may reach 850°C, the duration of the said thermal treatment being longer than 15 minutes, the said treatment being carried out in presence of an oxidizing atmosphere circulated in concurrent to the catalyst to be regenerated, and the said atmosphere being introduced into the thermal chamber at ambient temperature.

2. Process for regenerating chemical conversion catalysts according to claim 1, characterized in that the duration of the thermal treatment is between 30 minutes and 2 hours.

3. Process for regenerating chemical conversion catalysts according to claim 1, characterized in that the regeneration process is carried out continuously.

4. Process for regenerating conversion catalysts according to claim 1, characterized in that the catalyst is subjected to a plurality of regeneration and reuse cycles.

5. Process for regenerating conversion catalysts according to claim 1, characterized in that the conversion catalyst is sodium alumino silicate.

6. Process for regenerating conversion catalysts according to claim 1, characterized in that the oxidizing atmosphere is air, air enriched with oxygen or oxygen.

7. Use for carrying out the process for regenerating conversion catalysts according to claim 1, of an apparatus of the rotary furnace type inclined by 0.7 to 1 percent to the horizontal, comprising on its inside wall at its lower part downstream radial blades (16) and at its lower exit end a throttle (15), whereby this end opens into a receiving box (10) which is provided in its upper part with a draught chimney (11) channelling the roast gases and at its lower part a socket (12) destined for the withdrawal of catalyst.

0 025 746